**Europäisches Patentamt**

**European Patent Office**

**Office européen des brevets**

(19)

(11) Veröffentlichungsnummer : **0 428 674 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **B60R 22/42, B60R 22/40**

(21) Anmeldenummer : **90908490.7**

(22) Anmeldetag : **09.06.90**

(86) Internationale Anmeldenummer :
**PCT/DE90/00441**

(87) Internationale Veröffentlichungsnummer :
**WO 90/15733 27.12.90 Gazette 90/29**

(54) **TRÄGHEITSSENSOR ZUR FAHRZEUGSENSITIVEN ANSTEUERUNG VON BLOCKIERVORRICHTUNGEN VON SICHERHEITSGURTEN.**

(30) Priorität : **13.06.89 DE 3919218**

(43) Veröffentlichungstag der Anmeldung :
**29.05.91 Patentblatt 91/22**

(45) Bekanntmachung des Hinweises auf die
Patenterteilung :
**11.11.92 Patentblatt 92/46**

(84) Benannte Vertragsstaaten :
**DE ES FR GB IT SE**

(56) Entgegenhaltungen :
**EP-A- 55 389**
**DE-A- 3 624 569**
**GB-A- 2 084 000**

(73) Patentinhaber : **Autoflug GmbH & Co
Fahrzeugtechnik
Industriestrasse 10 Postfach 1180
W-2084 Rellingen 2 (DE)**

(72) Erfinder : **STRUCK, Klaus
Ilendörp 46
W-2000 Hamburg 63 (DE)**

(74) Vertreter : **Müller, Karl-Ernst Dr. et al
c/o Patentanwälte Becker & Müller
Eisenhüttenstrasse 2
W-4030 Ratingen 1 (DE)**

EP 0 428 674 B1

# Beschreibung

Die Erfindung betrifft einen fahrzeugsensitiven Trägheitssensor zur fahrzeugsensitiven Ansteuerung einer Blockiervorrichtung einer Sicherheitsgurtanordnung, insbesondere in Kraftfahrzeugen, mit einem Trägheitselement, dessen Auslenkung aus der Ruhelage über ein in Querrichtung auslenkbares Zugelement auf einen zugeordneten beweglichen Hebel der Blockiervorrichtung wirkt und deren Blockierfunktion einleitet, wobei das Zugelement mit einem Ende mit dem beweglichen Hebel verbunden ist und mit seinem anderen Ende an dem Gehäuse der Blockiervorrichtung festgelegt ist.

Ein gattungsgemäßer fahrzeugsensitiver Trägheitssensor ist in der DE-A-6324 569 (A1) beschrieben; bei dem bekannten Gegenstand ist der Trägheitssensor als Pendelmasse zwischen zwei Verbindungsstäben in Querrichtung auslenkbar eingespannt, von denen sich einer zwischen einer gehäusefesten Aufhangung und der Pendelmasse und der andere sich zwischen der Pendelmasse und einem mit dem beweglichen Hebel der Blockiervorrichtung verbundenen Übertragungselement befindet. Bei Beschleunigungen oder Verzögerungen verlagert sich das Trägheitselement und verkürzt so über die Auslenkung der Verbindungsstäbe den Abstand zwischen deren Einspannungen, so daß über die Betätigung des Übertragungselementes die Blockierfunktion des beweglichen Hebels der Blockiervorrichtung eingeleitet wird.

Mit dem bekannten Trägheitssensor ist der Nachteil verbunden, daß die Pendelmasse frei schwebend zwischen den Verbindungsstäben angeordnet ist, und es daher einer sicheren Verbindung zwischen den Verbindungsstäben und der Pendelmasse bedarf. Weiterhin sind an mehreren Stellen bewegliche Verbindungen zwischen den Einspannungen und den Verbindungsstäben sowie den Verbindungsstäben und der Pendelmasse herzustellen, und aus diesem Grunde ist der bekannte Trägheitssensor aufwendig herzustellen und vor allem bei seiner Montage schwierig zu justieren.

Der Erfindung liegt daher die Aufgabe zugrunde, einen gattungsgemäßen Trägheitssensor in Herstellung und Montage zu vereinfachen und in seiner Wirkungsweise zu verbessern.

Die Lösung dieser Aufgabe ergibt sich einschließlich vorteilhafter Ausgestaltungen und Weiterbildungen aus den Patentansprüchen, welche dieser Beschreibung nachgestellt sind.

Die Erfindung geht von dem Gedanken aus, daß das Trägheitselement mit seinem Eigengewicht auf dem beweglichen Hebel des Blockiergerätes auflagert und das Zugelement als ein flexibles Führungs- und Halteglied ausgebildet ist, welches durch eine Mittelbohrung des Trägheitselementes hindurchgeführt ist.

Mit der Erfindung ist der Vorteil verbunden, daß ein besonderes Gehäuse beziehungsweise auhrendige Einspannungen für das Trägheitselement wegfallen und eine unmittelbare Verbindung des Trägheitselementes zu dem jeweils anzusteuernden beweglichen Hebel des Blockiergerätes gegeben ist.

Nach Ausführungsbeispielen der Erfindung kann das flexible Führungs- und Haltglied aus einem zwischen Gehäuse und dem beweglichen Hebel eingespannten Feder oder einem flexiblen Draht bestehen.

Soweit nach einem Ausführungsbeispiel der Erfindung ein Faden als Führungs- und Halteglied vorgesehen ist, ist es vorteilhaft, den Faden als Kunststoff-Spritzteil auszubilden und an seinen Enden Befestigungselemente für die Halterung des Fadens am Gehäuse des Blockiergerätes einerseits sowie an dem anzusteuernden beweglichen Hebel andererseits vorzusehen. Dabei kann auch verwirklicht sein, daß der Faden einstückig an einer aus Kunststoff bestehenden Gehäuseabdeckung oder an der ebenfalls aus Kunststoff gefertigten beweglichen Hebelanordnung angeformt ist und nur an seinem freien Ende ein Befestigungselement zum Anschluß an das jeweils andere Bauteil aufweist. In diesem Zusammenhang ist es dann vorteilhaft, wenn auch die Hebelgestaltung des Blockiergerätes in einem Fertigungsverfahren hergestellt wird, welches es ermöglicht, entweder den Faden an der Hebelgestaltung anzuformen oder zumindest Aufnahmen für den Faden darin vorzusehen, zum Beispiel also im Spritzguß-, Druckguß- oder Strangpreßverfahren.

Ein Ausführungsbeispiel sieht weiterhin den Einsatz eines erfindungsgemäßen Trägheitssensors bei einer Klemmvorrichtung vor, wie sie in ihrer Ausbildung und Funktion in der DE-A-6324 569 näher beschrieben ist. In Anwendung der Erfindung ist dabei der bewegliche Hebel, auf welchem das Trägheitselement mit seinem Eigengewicht auflagert, als Klemmbacke der Gurtbandklemmvorrichtung ausgebildet.

Die Anwendung des erfindungsgemäßen Trägheitssensors zur Ansteuerung der beweglichen Klemmbacke ergibt nun den Vorteil, daß eine Feder zur Belastung der beweglichen Klemmbacke in ihre Klemmstellung nicht mehr erforderlich ist; auch findet eine selbsttätige Rückstellung der Klemmvorrichtung statt, weil das Trägheitselement in seiner nicht mehr ausgelenkten Ruhestellung mit seinem Eigengewicht auf der beweglichen Klemmbacke auflagert und diese jeweils in ihre Ruhelage zwingt. Erst bei Auslenkung der Klemmbacke zieht das Trägheitselement über das Betätigungsglied die Klemmbacke in Richtung auf eine Anlage am Gurtband, wobei sich nach erfolgtem Eingriff der beweglichen Klemmbacke am Gurtband aufgrund der ersichtlichen Kinematik die Klemmwirkung der Klemmvorrichtung verstärkt. Damit ist sichergestellt, daß schon vor dem Einsetzen des Gurtzuges aufgrund der Vorverlagerung eines angeschnallten Fahrzeuginsassen die bewegliche Klemmbacke bereits reibschlüssig am Gurtband anliegt, so daß bei ansteigender Belastung nur noch der Klemmbackenhub als Gurtbandauszug wirksam wird. Weiterhin kommt aufgrund der einfachen Ausgestaltung die Klemmvorrichtung in vorteilhafter Weise mit weniger Bauteilen aus und ist insbesondere einfacher herzustellen einfacher herzustellen und zu montieren

Ein weiteres Ausführungsbeispiel der Erfindung sieht vor, den erfindungsgemäßen Trägheitssensor bei einem selbstsperrenden Gurtaufroller mit zumindest einem fahrzeugsensitiven Blockiersystem einzusetzen, wie er beispielsweise in seinem grundsätzlichen Funktionsprinzip in dem DE-U-74 25 531 beschrieben ist. Hier sieht die Erfindung vor, das Trägheitselement auf dem Sensorhebel auflagern und das Führungs- und Halteglied an dem Hebel angreifen zu lassen, wobei eine Auslenkung des Trägheitselementes hier ein Ausschwenken des Hebels bis zum Eingriff in die Außenverzahnung der zugeordneten Steuerscheibe bewirkt.

In der Zeichnung sind Ausführungsbeispiele der Erfindung wiedergegeben, welche nachstehend beschrieben sind. Es zeigen:

Fig. 1 eine Sicherheitsgurtanordnung mit über einen Trägheitssensor angesteuerter Klemmvorrichtung im Längsschnitt in Ruhelage,

Fig. 2 den Gegenstand der Figur 1 in Klemmstellung,

Fig. 3 u. 4 jeweils ein anderes Ausführungsbeispiel der Klemmvorrichtung,

Fig. 5 einen selbstsperrenden Gurtaufroller für eine Sicherheitsgurtanordnung mit Trägheitssensor im Schnitt.

Eine Sicherheitsgurtanordnung weist eine Gurtaufroller 10 auf, auf dem Gurtband 11 aufgewickelt ist. Eine Aufwickelwelle 12 ist in einem U-förmigen Gehäuse 13 gehalten. welches auch Träger einer oberhalb des Gurtaufrollers 10 angeordneten Klemmvorrichtung ist. Die Klemmvorrichtung besteht aus einer an dem Gehäuse 13 angeschlagenen festen Klemmbacke 14 und einer im Gehäuse um eine Achse 15 drehbar gelagerten beweglichen Klemmbacke 16. Das vom Gurtaufroller 10 ablaufende Gurtband 11 ist zwischen der beweglichen Klemmbacke 16 und der festen Klemmbacke 14 hindurchgeführt, wobei die Achse 15 der beweglichen Klemmbacke 16 derart angeordnet ist, daß zum Herbeiführen der Klemmstellung die bewegliche Klemmbacke 16 nach oben, also vom Gurtaufroller 10 weggerichtet, verschwenkt werden muß.

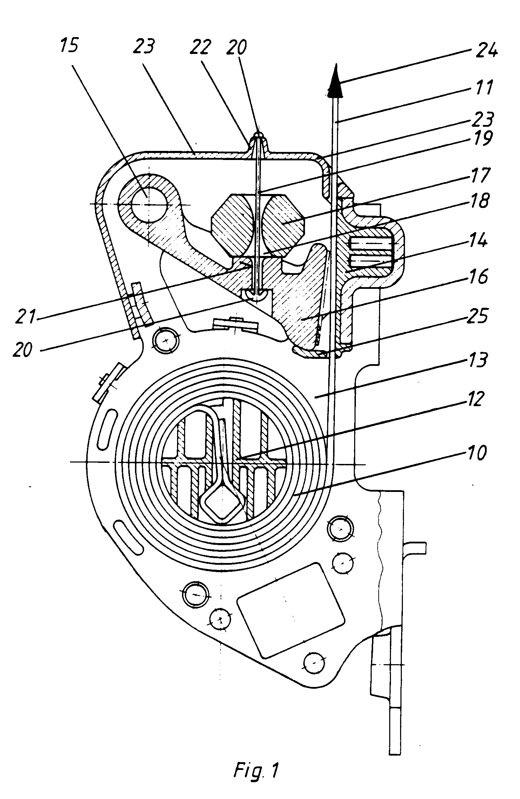

Oberhalb der beweglichen Klemmbacke 16 ist ein Trägheitselement 17 angeordnet, welches aufgrund seines Eigengewichtes auf der Oberfläche der beweglichen Klemmbacke 16 auflagert und das Trägheitselement 17 in eine durch einen Endanschlag 25 festgelegte Offen-Stellung belastet. Das Trägheitselement 17 ist an einem durch eine Mittelbohrung 18 im Trägheitselement 17 geführten Faden 19, vorzugsweise aus Kunststoff gefertigt, gehalten, welcher an seinen beiden äußeren Enden Befestigungselemente 20 aufweist, mit denen der Faden 19 einerseits in einer Durchbrechung 21 der beweglichen Klemmbacke 16 und andererseits in einer Aufnahme 22 einer Gehäuseabdeckung 23 derart festgelegt ist, daß sich in der in Figur 1 gezeigten Ruhestellung der Klemmvorrichtung ein straffer Fadenverlauf ohne besonderes Spiel im Bereich der Befestigungen 20, 21, 22 ergibt.

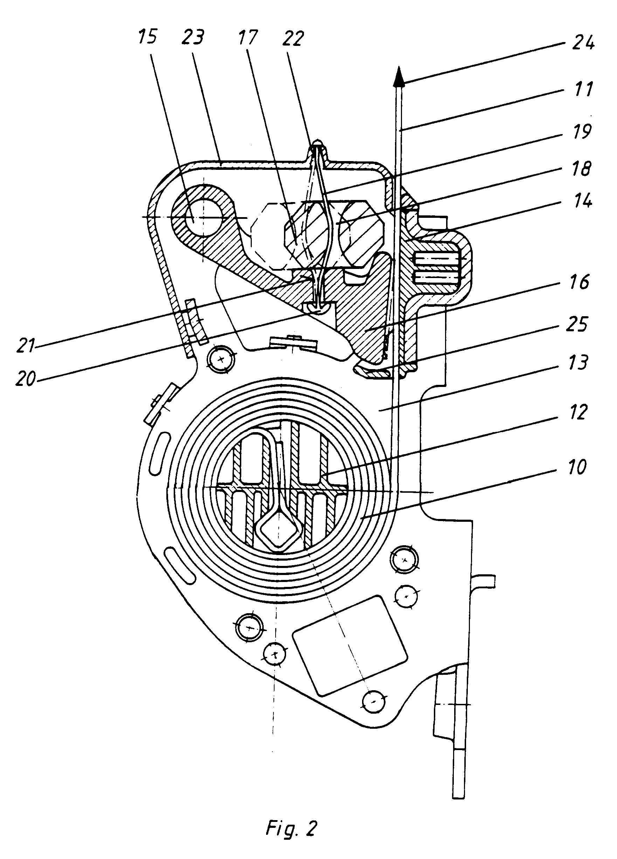

Die Klemmvorrichtung arbeitet aufgrund ihrer Ausgestaltung folgendermaßen: Bei Fahrzeugbeschleunigungen oder Verzögerungen erfolgt aufgrund der bekannten Kinematik eine Relativbewegung des Tragheitselementes 17 zum Gehäuse 13, wobei die Ansprechschwelle abhängig von von der Masse des Trägheitselementes und von der Ausgestaltung der Berührungsfläche Trägheitselement/bewegliche Klemmbacke ist und variiert werden kann. Bei seiner Auslenkung wirkt das Trägheitselement 17 mit seiner kinetischen Energie auf den Faden 19 ein, wie dies aus Figur 2 ersichtlich ist. Die Ausbiegung des in der Ruhelage straffen Fadenverlaufes führt zu einer Verkürzung des Abstandes zwischen beweglicher Klemmbacke 16 und Gehäuseabdeckung 23, wodurch die bewegliche Klemmbacke 16 um die Achse 15 hochschwenkt und zur reibschlüssigen Anlage am Gurtband 11 kommt; dabei ist die von dem Trägheitselement 17 ausgehende Kraft ausreichend, um die Klemmbacke 16 entsprechend anzuheben. In der in Figur 2 gezeigten Anlagestellung führt alsdann ein weiterer Gurtbandzug in Richtung des Pfeiles 24 zu einer weiteren Verschwenkung der beweglichen Klemmbacke 16 bis zur klemmenden Anlage an der festen Klemmbacke 14. Somit gibt nach Ansprechen des Trägheitselementes 17 die Klemmvorrichtung allenfalls noch einen Gurtbandbetrag frei, der dem Klemmbackenhub entspricht.

Nach Beendigung der entsprechenden Beschleunigungs- bzw. Verzögerungswirkung führt das Zurückkehren des Trägheitselementes 17 in seine Ruhelage aufgrund der von ihm ausgehenden Gewichtsbelastung zu einer Rückführung der Klemmbacke 16 in ihre Ruhestellung, so daß ohne weitere Maßnahmen eine Betriebsbereitschaft der Klemmvorrichtung gegeben ist.

Im Zusammenwirken des Gurtaufrollers 10 mit der Klemmvorrichtung wird üblicherweise die Funktion der Klemmvorrichtung so eingestellt, daß die Ansprechschwelle für die Klemmvorrichtung hoher ausgelegt wird, als diese bei dem selbstsperrenden Gurtaufroller entsprechend den gesetzlichen Vorschriften festgelegt ist. Somit tritt erst bei Überschreiten der "normalen" Ansprechschwelle eine Betätigung der Klemmvorrichtung ein. Durch diese Auslegung wird eine frühzeitige Schädigung des Gurtbandes durch die Klemmvorrichtung vermieden.

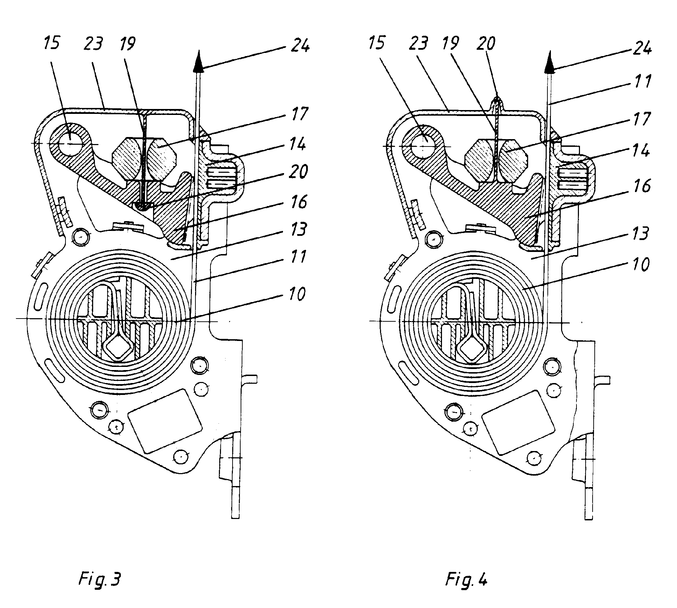

In den Figuren 3 und 4 sind abgewandelte Ausführungsbeispiele der Erfindung dargestellt, bei denen das als Faden ausgeführte Betätigungsglied einerseits an der Gehäuseabdeckung 23 (Figur 3) bzw. andererseits an der beweglichen Klemmbacke 16 (Figur 4) angeformt ist und lediglich an seinem freien Ende ein Befestigungselement 20 zum Anschlag an das jeweils andere Bauteil aufweist.

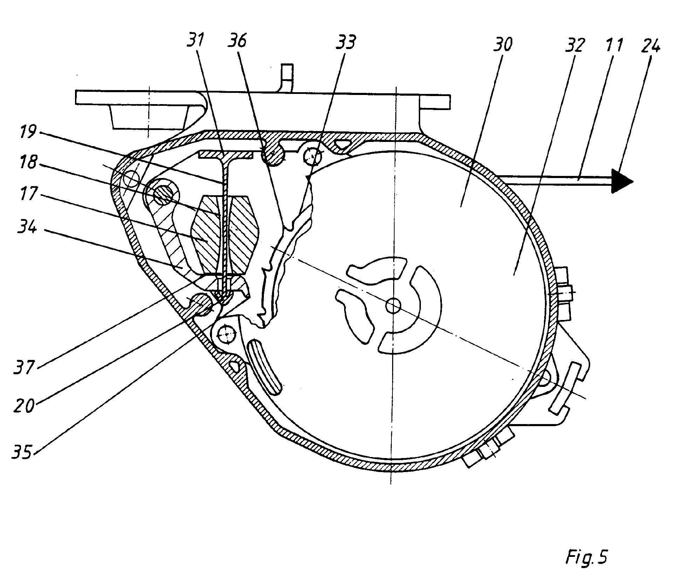

Das in Figur 5 gezeigte Ausführungsbeispiel zeigt einen Gurtaufroller 30 mit einem Gehäuse 31; das Blockiersystem des Gurtaufrollers 30 ist unter einer Abdeckkappe 32 verborgen, die in einem weggebrochenen Abschnitt eine außenverzahnte Steuerscheibe 33 erkennen läßt. Ein Sensorhebel 34 ist beweglich derart angeordnet und gelagert, daß er mit einer Blockierspitze 35 in Eingriff mit der Außenverzahnung 36 der Steuerscheibe gelangen kann und so die Blockierung des Gurtaufrollers herbeiführt, wie diese prinzipiell in dem DE-GM /4 25 531 beschrieben ist.

Für die Ansteuerung des Sensorhebels 34 sorgt das Trägheitselement 17, welches mit seinem Eigengewicht auf einer Führungsfläche 37 des Hebels 34 auflagert; der Faden 19 ist bei diesem Ausführungsbeispiel am Gehäuse 31 des Gurtaufrollers 30 befestigt, durchgreift das Trägheitselement 19 in dessen Mittenbohrung 18 und faßt mit einem Befestigungsmittel 20 am Hebel 34 an. Die Funktion des Tragheitssensors ergibt sich dabei in gleicher Weise, wie hinsichtlich der Figuren 1 bis 4 für eine Klemmvorrichtung beschrieben.

Die Montage des Gurtaufrollers hat dabei so zu erfolgen, daß aufgrund der Schwerkraft des Trägheitselementes 17 eine Auflagerung auf einer Führungsfläche des Hebels 34 erfolgt, wobei es sich in der Darstellung gemäß Figur 5 um eine Montageart auf beispielsweise der Hutablage eines Kraftfahrzeuges handelt. bei welcher das Gurtband seitlich aus dem Gurtaufroller herausgeführt ist. Soll dieser Gurtaufroller in senkrechtem Gurtverlauf montiert werden, so ist für eine entsprechend geänderte Aufhängung des Hebels 34 wie auch des Trägheitselementes 17 Sorge zu tragen.

## Patentansprüche

1. Fahrzeugsensitiver Trägheitssensor zur fahrzeugsensitiven Ansteuerung einer Blockiervorrichtung einer Sicherheitsgurtanordnung, insbesondere in Kraftfahrzeugen, mit einem Trägheitselement (17), dessen Auslenkung aus der Ruhelage über ein in Querrichtung auslenkbares Zugelement (19) auf einen zugeordneten beweglichen Hebel (16, 34) der Blockiervorrichtung wirkt und deren Blockierfunktion einleitet, wobei das Zugelement mit einem Ende mit dem beweglichen Hebel verbunden ist und mit seinem anderen Ende an dem Gehäuse (23) der Blockiervorrichtung festgelegt ist, dadurch gekennzeichnet, daß das Trägheitselement (17) mit seinem Eigengewicht auf dem beweglichen Hebel (16, 34) des Blockiergerätes auflagert und das Zugelement als ein flexibles Führungs- und Halteglied (19) ausgebildet ist, das durch eine Mittelbohrung (18) des Trägheitselementes (17) hindurchgeführt ist.

2. Trägheitssensor nach Anspruch 1, dadurch gekennzeichnet, daß das Führungs- und Halteglied für das Trägheitselement (17) aus einem zwischen dem beweglichen Hebel (16, 34) des Blockiergerätes und dessen Gehäuse (13, 23, 31) eingespannten Faden (19) besteht.

3. Trägheitssensor nach Anspruch 1, dadurch gekennzeichnet, daß das Führungs- und Halteglied (19) für das Trägheitselement (17) aus einem zwischen dem beweglichen Hebel (16, 34) des Blockiergerätes und dessen Gehäuse (13, 23, 31) eingespannten flexiblen Draht besteht.

4. Trägheitssensor nach Anspruch 2, wobei das Zugelement an seinen Enden Befestigungselemente für die Halterung am Gehäuse der Blockiervorrichtung sowie an dem beweglichen Hebel aufweist, dadurch gekennzeichnet, daß der Faden (19) als Kunststoff-Spritzteil ausgebildet ist.

5. Trägheitssensor nach Anspruch 2, wobei das Zugelement an einem Ende mit einem Befestigungselement zum Anschlag an dem beweglichen Hebel versehen ist, dadurch gekennzeichnet, daß der Faden (19) als Kunststoff-Spritzteil einstückig an einer aus Kunststoff bestehenden Gehäuseabdeckung (23, 31) angeformt ist.

6. Trägheitssensor nach Anspruch 2, wobei das Zugelement an einem Ende mit einem Befestigungselement zum Anschlag an dem Gehäuse der Blockiervorrichtung versehen ist, dadurch gekennzeichnet, daß der Faden (19) als Kunststoff-Spritzteil einstückig an dem beweglichen Hebel (16, 34) angeformt ist.

7. Trägheitssensor nach einem der Ansprüche 1 bis 6, dadurch gekennzeichnet, daß der Hebel als Klemmbacke (16) einer Gurtbandklemmvorrichtung ausgebildet ist.

8. Trägheitssensor nach einem der Ansprüche 1 bis 6, dadurch gekennzeichnet, daß der Hebel als Sensorklinke (34) ausgebildet ist, die einer außenverzahnten Steuerscheibe (33) eines Gurtaufrollers zugeordnet ist.

## Claims

1. A vehicle-sensitive inertia sensor for the vehicle-sensitive actuation of a locking device of a safety belt arrangement, especially for motor vehicles, having an inertia element (17), a deflection of which from its resting position acts on a corresponding movable lever (16,34) of the locking device via a tensile component (19) that is movable in a transverse direction and initiates a locking function, whereby the tensile component is connected with its first end to the movable lever and with its second end to a housing (23) of the locking device, characterized in that the inertia element (17) is resting with its own weight on the movable lever (16, 34) of the locking device, and the tensile component is in the form of a flexible guide and retaining member (19) which is guided through a center bore (18) of the inertia element (17).

2. An inertia sensor according to claim 1, characterized in that the guide and retaining member for the inertia element (17) is in the form of a thread (19) that is suspended between the movable lever (16, 34) of the locking device and the housing thereof (13, 23, 31).

3. An inertia sensor according to claim 1, characterized in that the guide and retaining member (19) for the inertia element (17) consists of a flexible wire suspended between the movable lever (16, 34) of the locking device and the housing thereof (13, 23, 31).

4. An inertia sensor according to claim 2, whereby the tensile component at its ends is provided with fastening elements for fastening at the housing of the locking device as well as at the movable lever, characterized in that the thread (19) is formed as an injection molded plastic part.

5. An inertia sensor according to claim 2, whereby the tensile element on one end is provided with a fastening element for fastening at said movable lever, characterized in that the thread (19) formed as an injection molded plastic part is formed as an integral part of the housing (23, 31) made from plastic.

6. An inertia sensor according to claim 2, whereby the tensile component on one end is provided with a fastening element for fastening at the housing of the locking device, characterized in that the thread (19) formed as an injection molded plastic part is formed as an integral part of the movable lever (16, 34).

7. An inertia sensor according to claim 1, characterized in that the lever is formed as a clamping jaw (16) of a safety belt clamping device.

8. An inertia sensor according to claim 1, characterized in that the lever is provided in the form of a sensor latch (34) corresponding to a control disk (33) with outer toothing of a safety belt reeling device.

## Revendications

1. Capteur inertiel, sensible au véhicule, destiné à la commande, réagissant au véhicule, d'un dispositif de blocage d'un ensemble de ceinture de sécurité, en particulier dans des véhicules automobiles, comportant un élément d'inertie (17) dont la déviation, à partir de la position de repos, par un élément de traction (19) déviable transversalement, agit sur un levier (16, 34) déplaçable, correspondant, du dispositif de blocage et amorce sa fonction de blocage, l'élément de traction étant relié, par une extrémité, au levier mobile et étant fixé, par son autre extrémité, sur le boîtier (23) du dispositif de blocage, caractérisé en ce que l'élément d'inertie (17) repose, sous l'effet de son propre poids, sur le levier mobile (16, 34) du dispositif de blocage et en ce que l'élément de traction est un organe flexible de guidage et de maintien (19) qui traverse un trou central (18) de l'élément d'inertie (17).

2. Capteur inertiel selon la revendication 1, caractérisé en ce que l'organe de guidage et de maintien pour l'élément d'inertie (17) est constitué d'un fil (19), tendu entre le levier (16, 34) mobile du dispositif de blocage et son boîtier (13, 23, 31).

3. Capteur inertiel selon la revendication 1, caractérisé en ce que l'organe de guidage et de maintien (19) pour l'élément d'inertie (17) est constitué d'un fil flexible, tendu entre le levier mobile (16, 34) du dispositif de blocage et son boîtier (13, 23, 31).

4. Capteur inertiel selon la revendication 2 dans lequel l'élément de traction présente, à ses extrémités, des éléments de fixation du dispositif de blocage sur le boîtier ainsi que sur le levier mobile, caractérisé en ce que le fil (19) est un élément en matière plastique moulé par injection.

5. Capteur inertiel selon la revendication 2 dans lequel l'élément de traction est pourvu, à l'une de ses extrémités, d'un élément de fixation pour venir en butée contre le levier mobile, caractérisé en ce que le fil (19) est un élément en matière plastique moulé par injection, formé d'une seule pièce sur un couvercle (23, 31) du boîtier en matière plastique.

6. Capteur inertiel selon la revendication 2 dans lequel l'élément de traction est pourvu, à l'une de ses extrémités, d'un élément de fixation pour venir en butée contre le boîtier du dispositif de blocage, caractérisé en ce que le fil (19) est un élément en matière plastique moulé par injection, formé d'une seule pièce sur le levier mobile (16, 34).

7. Capteur inertiel selon l'une des revendications 1 à 6, caractérisé en ce que le levier est une mâchoire de serrage (16) d'un dispositif de serrage de sangle de ceinture.

8. Capteur inertiel selon l'une des revendications 1 à 6, caractérisé en ce que le levier est un cliquet (34) qui est associé à un disque de commande (33) à denture extérieure d'un enrouleur de ceinture.

Fig. 1

Fig. 2

Fig. 3

Fig. 4

Fig.5